# FASCICULE DE BREVET EUROPEEN

(11) **EP 0 821 457 B1**
(45) Date de publication et mention de la délivrance du brevet: **24.10.2001**
(21) Numéro de dépôt: 97401586.9
(22) Date de dépôt: 03.07.1997
(51) Int. Cl.: H02B 7/06, H02B 7/01

(54) **Poste préfabriqué pour appareillage électrique, en particulier pour appareillage sous enveloppe métallique**
Vorgefertigte Station für ein Schaltgerät, insbesondere für ein metallgekapseltes Gerät
Prefabricated station for switchgear, especially for metal-clad switchgear

(30) Priorité: 25.07.1996 FR 9609374
(43) Date de publication de la demande: 28.01.1998
(73) Titulaire: GEC ALSTHOM T & D SA, 75116 Paris (FR)
(72) Inventeur: Marmonier, Jean, 73100 Aix les Bains (FR)
(74) Mandataire: Gosse, Michel

(56) Documents cités:
- DE-A- 4 341 511
- US-A- 3 925 679
- HARRO M. LUEHRMANN: "Design and Reliability of High Voltage Substations, GIS Versus Conventional." CONFERENCE RECORD OF 1985 ANNUAL PULP AND PAPER INDUSTRY TECHNICAL CONFERENCE, 26 avril 1985, HOUSTON, TEXAS, pages 11-16, XP002029048
- BODO ZAHN: "Containerized substations rated to 170 kV - the fast answer to power supply bottlenecks." ABB REVIEW, no. 9, 1994, ZURICH, CH, pages 23-30, XP000477711
- WILLI J. SCHMITT ET AL.: "Vollgekapselte, SF6-isolierte 110-kV-Schaltanlagen in der Energieversorgung." BBC-NACHRICHTEN, février 1971, pages 3-14, XP002029049

## Description

La présente invention se rapporte à un poste préfabriqué pour appareillage électrique, en particulier pour appareillage sous enveloppe métallique.

Elle concerne plus précisément un poste préfabriqué d'appareillage électrique, en particulier d'appareillage haute tension sous enveloppe métallique, constitué d'un conteneur dans lequel est disposé le long d'une première paroi longitudinale l'appareillage, un espace étant prévu entre cet appareillage et la seconde paroi longitudinale formant un couloir d'exploitation.

Un appareillage électrique de type appareillage sous enveloppe métallique dit blindé peut être monté sur site ou installé sur site sous la forme d'un poste préfabriqué.

Dans ce dernier cas, l'appareillage électrique est disposé dans un premier conteneur et l'appareillage de commande comprenant les armoires contenant les équipements basse tension de contrôle et de protection dans un second conteneur. Ces conteneurs doivent correspondre au gabarit routier pour leur transport. Une fois installés sur site, ces conteneurs forment les salles d'appareillage et de commande.

Par ailleurs, dans la salle d'appareillage, il est souhaitable de prévoir un couloir d'exploitation permettant l'accès à l'appareillage pour les opérations de maintenance. En règle générale, l'appareillage est disposé le long d'une paroi longitudinale de la salle, un espace entre l'appareillage et l'autre paroi longitudinale étant réservé pour former ce couloir d'exploitation. Un poste selon le préambule de la revendication 1 est connu par DE 43 41 5111.

L'installation sur site des deux salles nécessitent la connexion électrique de l'appareillage et des équipements basse tension sur ce site, entraînant un temps de mise en service important et la nécessité d'essais sur place coûteux.

L'invention supprime cette opération de connexion électrique sur site, tout en utilisant des conteneurs de poste préfabriqué d'encombrement réduit afin de permettre leur transport.

Pour ce faire, conformément à l'invention, au moins une armoire contenant des équipements de contrôle et de protection est connectée électriquement à l'appareillage et disposée dans ledit couloir le long de la seconde paroi longitudinale du conteneur, au moins une ouverture étant prévue dans cette seconde paroi de dimension supérieure ou égale à la dimension frontale de l'armoire.

Il est ainsi possible de réaliser les essais fonctionnels entre l'appareil et l'armoire de contrôle et de protection en usine et de diminuer le temps de mise en service sur site.

Par ailleurs, le volume du conteneur est pratiquement totalement utilisé pendant le transport ce qui optimise le coût de celui-ci.

De préférence, une face frontale de l'armoire est disposée en face de ladite ouverture.

L'invention concerne également un conteneur auxiliaire de poste préfabriqué destiné à être associé avec le poste précédent contenant au moins une armoire de contrôle de niveau supérieur et comportant une paroi longitudinale pourvue d'au moins une ouverture de même dimension que ladite ouverture.

De préférence, ladite armoire de contrôle supérieur est disposée le long de ladite paroi à côté de ladite ouverture.

L'invention concerne un premier procédé d'installation sur site d'un tel poste selon lequel le conteneur est mis en place et l'armoire translatée hors de ladite ouverture, une de ses faces frontales étant disposée dans l'ouverture et un capot de protection étant disposé sur l'armoire et fermant l'ouverture.

L'invention concerne enfin un second procédé d'installation sur site d'un tel poste selon lequel le conteneur est mis en place, le conteneur auxiliaire est accolé à ce conteneur, leur ouverture respective étant face à face, et l'armoire de contrôle et de protection est translatée hors du conteneur dans le conteneur auxiliaire et connectée à l'armoire de contrôle de niveau supérieur.

L'invention est décrite ci-après plus en détail à l'aide de figures ne représentant qu'un mode de réalisation préféré.

La figure 1 est une vue en perspective d'un poste préfabriqué conforme à l'invention, en position de transport.

La figure 2 est une vue en perspective du même poste préfabriqué en position installé, selon le premier procédé d'installation.

Les figures 3A et 3B sont des vues en perspective illustrant le second procédé d'installation.

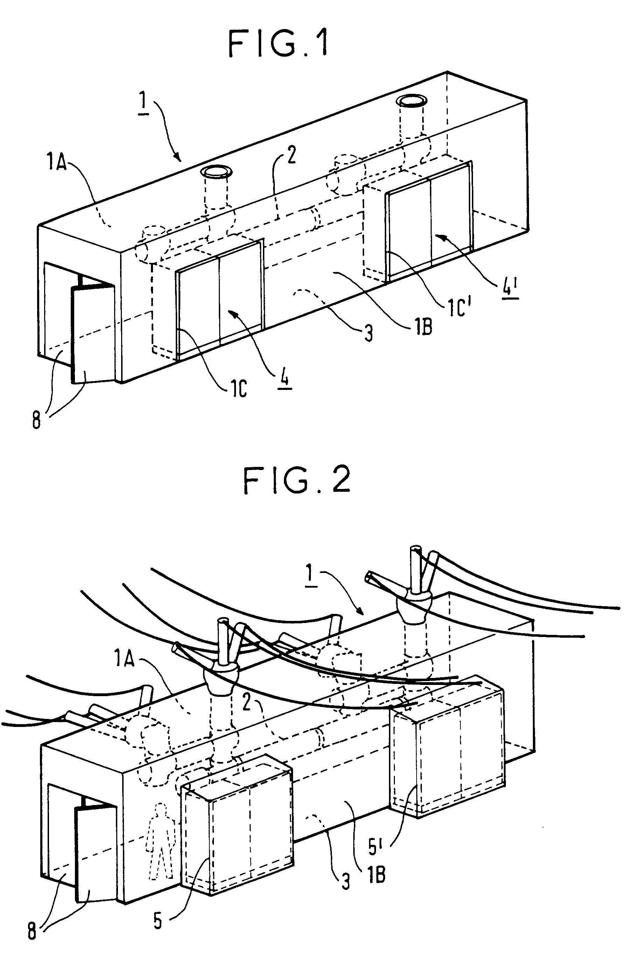

Le poste préfabriqué d'appareillage électrique, conforme à l'invention et représenté sur la figure 1, est constitué d'un conteneur 1 pourvu d'une porte d'accès 4 à une extrémité et dans lequel est disposé le long d'une première paroi longitudinale 1A l'appareillage électrique, en particulier un appareillage électrique haute tension sous enveloppe métallique dit blindé 2. Un espace est prévu entre cet appareillage 2 et la seconde paroi longitudinale 1B formant un couloir d'exploitation 3. Dans ce couloir 3 le long de la paroi longitudinale 1B, sont disposées deux armoires 4, 4' contenant des équipements de contrôle et de protection connectées électriquement à l'appareillage 2, par exemple grâce à des espaces de liaison prévus dans le plancher du conteneur 1 et recevant les câbles de liaison électrique. Deux ouvertures 1C, 1C' sont prévues dans cette seconde paroi 1B de dimension supérieure ou égale à la dimension frontale de chaque armoire 4, 4'. Selon l'exemple représenté, les ouvertures 1C, 1C' sont sensiblement de même dimension que la dimension frontale de chaque armoire 4, 4'.

Le conteneur 1 contenant tous ces éléments correspond au gabarit de transport routier ou ferroviaire.

Selon un premier procédé d'installation sur site; comme représenté sur la figure 2, le conteneur 1 est mis en place sur le sol et les armoires sont translatée hors des ouverture 1C. Une de leurs faces frontales est disposée dans les ouvertures 1C et un capot de protection 5, 5', contre les intempéries et le rayonnement solaire, est disposé sur chaque armoire 4, 4' et ferme chaque ouverture 4, 4'.

Ainsi est libéré sur site le couloir d'exploitation 3 où le personnel d'exploitation peut intervenir tout autant sur l'appareillage 2 que sur la face frontale de chaque armoire 4, 4' tournée vers ce couloir 3. Selon ce procédé d'installation, la salle de ccnduite est installée à distance avec les équipements de contrôle et de commande de niveau supérieur.

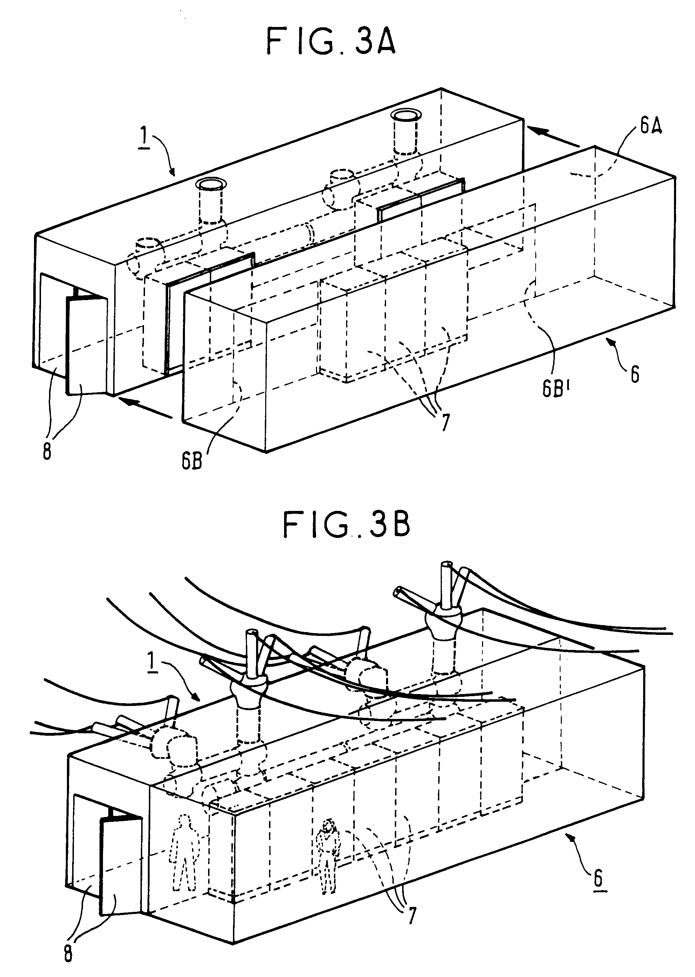

Selon un second procédé d'installation, illustré sur les figures 3A et 3B, un conteneur auxiliaire 6 de poste préfabriqué destiné est associé avec le conteneur précédent 1.

Ce conteneur 6, également au gabarit de transport routier ou ferroviaire, contient des armoires 7 de contrôle de niveau supérieur et comporte une paroi longitudinale 6A pourvue de deux ouvertures 6B, 6B' de même dimension que les ouvertures 1C, 1C' du conteneur 1. Avantageusement, les armoires 7 de contrôle supérieur sont disposées le long de la paroi 6A entre les deux ouvertures 6B, 6B'.

Sur site, le premier conteneur 1 est mis en place sur le sol, le conteneur auxiliaire 6 est accolé à ce conteneur 1, leurs ouvertures respectives étant face à face. Les armoires 4, 4' du premier conteneur 1 sont translatées hors du conteneur 1 dans le conteneur auxiliaire 6 et connectées aux armoires 7 de contrôle de niveau supérieur. Cette connexion peut être réalisée par interfaces directs compte tenu de la disposition des armoires, sans nécessité de câbles, ce qui permet une réduction du coût de matériel et de main d'oeuvre de câblage et une réduction du temps de mise en service. De plus, toutes les armoires peuvent être testées en usine, seul un essai final de fonctionnement sur site étant nécessaire.

Comme visible sur la figure 3B, il peut être ainsi réalisé une salle d'appareillage et une salle de conduite, les armoires 4, 4' présentant sur leur face frontale tournée vers la salle d'appareillage les synoptiques de commande locale et sur leur face frontale tournée vers la salle de conduite les dispositifs de protection tels que des relais, des prises d'injection pour les relais de protection, etc...

## Revendications

1. Poste préfabriqué d'appareillage électrique, en particulier d'appareillage haute tension sous enveloppe métallique, constitué d'un conteneur (1) dans lequel est disposé le long d'une première paroi longitudinale (1A) l'appareillage (2), un espace étant prévu entre cet appareillage (2) et la seconde paroi longitudinale (1B) formant un couloir d'exploitation (3), au moins une armoire (4, 4') contenant des équipements de contrôle et de protection étant connectée électriquement à l'appareillage (2) et disposée dans ledit couloir (3) le long de la seconde paroi longitudinale (1B), **caractérisé en ce qu'**au moins une ouverture (1C, 1C') étant prévue dans cette seconde paroi (1B) de dimension supérieure ou égale à la dimension frontale de l'armoire (4, 4').

2. Poste selon la revendication 1, **caractérisé en ce qu'**une face frontale de l'armoire (4, 4') est disposée en face de ladite ouverture (1C, 1C').

3. Conteneur auxiliaire (6) de poste préfabriqué destiné à être associé avec le poste selon la revendication 1 ou 2, **caractérisé en ce qu'**il contient au moins une armoire (7) de contrôle de niveau supérieur et comporte une paroi longitudinale (6A) pourvue d'au moins une ouverture (6B, 6B') de même dimension que ladite ouverture.

4. Conteneur selon la revendication 3, **caractérisé en ce que** ladite armoire (7) de contrôle supérieur est disposée le long de ladite paroi (6A) à côté de ladite ouverture (6B, 6B').

5. Procédé d'installation sur site d'un poste selon la revendication 1 ou 2, **caractérisé en ce que** le conteneur (1) est mis en place et l'armoire (4, 4') translatée hors de ladite ouverture (1C, 1C'), une de ses faces frontales étant disposée dans l'ouverture (1C, 1C') et un capot de protection (5) étant disposé sur l'armoire (4, 4') et fermant l'ouverture (1C, 1C').

6. Procédé d'installation sur site d'un poste selon la revendication 3 ou 4, **caractérisé en ce que** le conteneur (1) est mis en place, le conteneur auxiliaire (6) est accolé à ce conteneur (1), leur ouverture respective étant face à face, et l'armoire de contrôle et de protection (4, 4') est translatée hors du conteneur (1) dans le conteneur auxiliaire (6) et connectée à l'armoire de contrôle de niveau supérieur (7).

## Claims

1. A prefabricated electrical switchgear substation, in particular for metal-clad high voltage switchgear, the substation being constituted by a container (1) having the switchgear (2) placed along a first longitudinal wall (1A) thereof, with a gap being left between said switchgear (2) and the second longitudinal wall (1B) so as to form an operating passage (3), at least one cabinet (4, 4') containing control and protection equipment being electrically connected to the switchgear (2) and being placed in said passage (3) along the second longitudinal wall (1B), the substation being **characterized in that** at least one opening (1C, 1C') is provided in said second wall (1B) of dimensions greater than or equal to the front dimensions of the cabinet (4, 4').

2. A substation according to claim 1, **characterized in that** a front face of the cabinet (4, 4') is placed in register with said opening (1C, 1C').

3. An auxiliary container (6) for a prefabricated substation and designed to be associated with the substation according to claim 1 or 2, **characterized in that** it contains at least one higher level control cabinet (7) and includes a longitudinal wall (6A) provided with at least one opening (6B, 6B') of the same dimensions as said opening.

4. A container according to claim 3, **characterized in that** said higher level control cabinet (7) is placed along said wall (6A) beside said opening (6B, 6B').

5. A method of installing a substation according to claim 1 or 2 on site, the method being **characterized in that** the container (1) is put into place and the cabinet (4, 4') is moved in translation out through said opening (1C, 1C'), one of its front faces being placed in the opening (1C, 1C') and a protective cover (5) being placed over the cabinet (4, 4') and closing the opening (1C, 1C').

6. A method of installing a substation according to claim 3 or 4 on site, the method being **characterized in that** the container (1) is put into place, the auxiliary container (6) is placed next to said container (1), their respective openings being in register, and the control and protection cabinet (4, 4') is moved in translation out from the container (1) into the auxiliary container (6) and is connected to the higher level control cabinet (7).

## Patentansprüche

1. Automatischer Multipolarlasttrennschalter mit, für jeden Pol, einer gegossenen, isolierenden Hülle (1), die einen ersten zylindrischen Teil (1A) umfasst, der einen Vakuumkolben (2) umgibt, axial verlängert durch einen zweiten Teil (1B), wobei die Hülle an einem ersten Ende einen ersten Kontakt (13) umfasst, der mit einer ersten Klemme des Kolben verbunden ist, und dazu dient, mit einem Sammelschienensystem zusammenzuarbeiten, und an einem zweiten Ende einen zweiten Kontakt (9), der mit einer zweiten Klemme des Vakuumkolbens verbunden ist und dazu dient, mit einem Kabel eines Kabelbaumes zusammenzuwirken, wobei die Hüllen der unterschiedlichen Pole an ein und demselben metallischen Profil (5) befestigt sind, entlang welchem eine Betätigungswelle (15) angeordnet ist, die allen Polen gemeinsam ist, welche durch eine Steuerung betätigt wird, die in einem an dem Profil befestigten Kasten enthalten ist, wobei der zweite Teil (1B) der Hülle insbesondere eine metallische Röhre (7) für die Stromleitung umgibt, und einen Stab (8-8A) für die Betätigung des Vakuumkolbens, wobei das Profil (5) in Rotation versetzt wird, um die Trennfunktion des Apparates sicherzustellen, wobei die metallische Röhre (7) an der isolierenden Hülle während des Gießens derselben befestigt ist, **dadurch gekennzeichnet, dass** die metallische Röhre (7) an einem Ende einen um 90° aufgeweiteten Teil (7A) für die Fixierung an einer Platte (9) aufweist, die den zweiten Kontakt bildet.

2. Lasttrennschalter nach Anspruch 1, **dadurch gekennzeichnet, dass** die Hülle ein metallisches Teil (20) umfasst, dass während des Gießens eingefügt ist, mit einem über die Hülle vorstehenden Ende, welches als Anlenkpunkt dient und an einem Mechanismus zur Betätigung des Vakuumkolbens fixiert ist, umfassend ein Glied (18), das am Ende des Stabes (8-8A) zur Betätigung des Vakuumkolbens angelenkt ist, einen isolierenden Arm (17) und einen Stangensatz (16-17A), der mit der Steuerwelle (15) verbunden ist.

3. Lasttrennschalter nach einem der Ansprüche 1 und 2, **dadurch gekennzeichnet, dass** er Einrichtungen zur Regelung der Distanz zwischen den Kontakten (2A, 2B) des Vakuumkolbens von außen umfasst, wobei die Einrichtungen einen Keil (24) umfassen, der an das Ende des Stabes (8-8A) zur Betätigung des Kolbens geschraubt ist, wobei der Keil (24) in Anlage gegen einen Ring (21) kommt, an dem das Glied (18) angelenkt ist, und gegen eine Hülse (22), die den Stab umgibt (8A) und selbst von einer Feder (23) umgeben ist, die in Anlage gegen ein Ende der Hülse (22) sowie gegen den Ring (21) kommt.

4. Lasttrennschalter nach Anspruch 3, **dadurch gekennzeichnet, dass** er eine Indikation der Abnutzung der Kontakte des Vakuumkolbens umfasst, sichtbar und zugänglich von der Basis des Pols, wobei diese Indikation der Abstand ist, der den Keil (24) von dem Ring (21) in eingerasteter Position des Lasttrennschalters trennt.

5. Lasttrennschalter nach einem der Ansprüche 1 bis 4, **dadurch gekennzeichnet, dass** die Hülle, ausgehend von dem Gießen, zwei Flügel (14) umfasst, die den ersten Kontakt (13) umgeben.

6. Lasttrennschalter nach einem der Ansprüche 1 bis 5, **dadurch gekennzeichnet, dass** die Hülle in Nachbarschaft zur Verbindung zwischen den zwei Teilen (1A, 1B) der Hülle ein metallisches Teil (35) umfasst, das während des Gießens der Hülle angeordnet ist und ein ringförmiges Volumen (36) aufweist, das koaxial zur Hülle ist, und durch Bohrungen (37) mit dem Inneren der Röhre (7) kommuniziert.
